# EUROPEAN PATENT SPECIFICATION

(11) **EP 4 068 995 B1**
(45) Date of publication and mention of the grant of the patent: **08.11.2023**
(21) Application number: 20819696.4
(22) Date of filing: 02.12.2020
(51) Int. Cl.: A23K 40/00, A23K 50/45, A23K 50/48, A23P 30/20, A23J 3/26

(54) **APPARATUS FOR HEAT TREATMENT OF SEMI LIQUID OR PASTY FOOD PRODUCTS**
VORRICHTUNG ZUR WÄRMEBEHANDLUNG VON HALBFLÜSSIGEN ODER PASTÖSEN NAHRUNGSMITTELN
APPAREIL DE TRAITEMENT THERMIQUE DE PRODUITS ALIMENTAIRES SEMI-LIQUIDES OU PÂTEUX

(30) Priority: 02.12.2019 DK PA201970742
(43) Date of publication of application: 12.10.2022
(73) Proprietor: SP STEEL ApS, 6000 Kolding (DK)
(72) Inventor: BRØDSGAARD, Søren Peder, 6000 Kolding (DK)
(74) Representative: Zacco Denmark A/S
(86) International application number: PCT/EP2020/084279
(87) International publication number: WO 2021/110750

(56) References cited:
- EP-A2- 0 039 957
- EP-B1- 0 039 957
- CN-A- 1 067 604
- CN-A- 107 183 497
- US-A- 4 125 635
- US-A1- 2009 068 336
- US-A1- 2017 013 848

## Description

The invention relates to an apparatus for treatment or preparing of semi liquid or pasty food products, which apparatus comprises an elongate chamber formed between two concentric tube-formed bodies, where at least one of the bodies is provided with heating means.

The invention also relates to methods of treatment or preparing of semi liquid or pasty food products.

### Background art

Machines for preparing extruded food products, for example meat analog products made from meat and vegetable protein are known. Such machines can be used for heat treatment (cooking) of high protein feed products for the animal feed industry e.g. processing of wet cat food.

From US4237145 is known an apparatus for preparing foodstuffs, wherein proteins constitute an essential part of the foodstuffs. It is known that such products become hard as a result of boiling or frying, and the reason for this change from soft to hard consistency is that, when heated, the proteins coagulate and bind the components of the product together. Here the product is heated by pumping the foodstuff through a pair of concentric tubes in a microwave applicator. To avoid the foodstuff or product to harden and to stitch to the surfaces of the concentric tubes, the extrusion mass is exposed to microwaves in a microwave applicator and the exposed mass is discharged from the tube and transported therefrom in solid state. The extrusion mass passing through the microwave applicator is given maximum heat intensity in the center of the cross section through the extrusion mass and minimum intensity in the periphery of the cross section, and further comprising supplying a lubricant to the contact surface between the extrusion mass and the inner wall of the tube.

US 2009/068336 A1 discloses the production of a meat emulsion product having a meat-like appearance and surface texture and the products so produced, and more specifically to a meat analog product and process utilizing low shear extrusion technology. US 2009/068336 A1 also discloses an exemplary extruding device, wherein the device has a hollow cylinder or barrel shaped outer housing with a central axis extending through the center of the cylinder. Mounted within the barrel is a rotatable shaft having a helical vane attached to the outer surface of the shaft. The shaft and barrel define a space between the outer shaft surface and the inner barrel wall. The helical vane extends from the shaft outer surface to the barrel inner wall. The shaft progressively increases in diameter from inlet to outlet with an overall conical shape.

Another example of a traditional cooker for preparing foodstuff passing through a tubular channel is an apparatus where the two main process parts is an inner part formed as an Archimedes screw and an outer part formed by one or more cylindrical barrels. The Archimedes screw is used to convey the foodstuff or mass through the cooker.

To be able to regulate density and texture according to the type of mass, the feed mass can be more or less compacted during cooking which compacting is controlled by inserting screw elements with a different screw pitch causing a pressure buildup in the machine. These screws often have a complex geometry and is expensive to manufacture.

Furthermore, the mass tends to be burned and stick to the screw elements causing issues when burned dark lumps tearing itself loose causing a deviation in the product. The complex geometry of the screw elements prevents an efficient scraper from being implemented.

To avoid burned mass from building up in or on the threading of the screw or on the inner side of the barrel, frequent cleaning is required, often after few hours of operation. It is time consuming to dismantle the machine for cleaning causing lost production time.

Traditional cookers of this type are built having a stationary outer part, mainly due to the process is copied from traditional feed extruders that are built that way. To obtain an even heating, it is required to have multiple steam injection points e.g. with an interval of 300mm. Steam is injected at the top left of the outer part and extracted at the lower right bottom of the outer part. Steam will however find a direct way through these two points causing an uneven heating of the outer part.

The object of the invention is to provide a simple and stable equipment for heat treatment of a mass of a semi liquid or pasty food, which food can be human food or animal- or pet food.

This is achieved by an apparatus for treatment or preparing of semi liquid or pasty food products, which apparatus comprises an elongate chamber formed between two concentric tube-formed bodies, an inner tube and an outer tube, which elongate chamber having an inlet for the product to be treated in one end and an outlet for treated product in an opposite end where at least one of the bodies is provided with heating means, where the inner tube and the outer tube are rotatable in opposite directions.

The present invention is defined by the claims 1-19.

The present invention discloses an apparatus (10) for treatment or preparing of semi liquid or pasty food products supplied to the apparatus by a pump, which apparatus (10) comprises an elongate chamber (1) formed between two concentric tube- formed bodies (2, 3), an inner tube (2) and an outer tube (3), which elongate chamber (1) having an inlet (4) for the product to be treated in one end (40) and an outlet (5) for treated product in an opposite end (50) where at least one of the bodies (2, 3) is provided with heating means, characterized in that said tubes (2, 3) are rotated by driving means (13, 14), such as toothed wheels, belts or other known driving means, where one or more motors (15) drives the inner and outer tubes (2, 3) respectively by engagement with the driving means (13, 14), where the inner tube (2) and the outer tube (3) are rotatable in opposite directions, and that the semi liquid or pasty food products is transported through the apparatus by pressure from the pump.

According to the invention, two main process parts are constituted by a small tube (the inner part) and a larger tube (the outer part) The food mass is transported through the heat treatment apparatus by pressure from a pump, for example a meat slurry pump or a pump capable of transporting semi liquid or pasty vegetable or vegan food as well as meat into the heat treatment apparatus.

Hereby no complex and expensive geometry is needed which reduces fabrication costs substantially.

In an embodiment of the heat treatment apparatus, the elongate chamber is provided with a decreasing volume, at least partly over a distance from the inlet end to the outlet end.

Hereby a pressure is build up in the chamber providing texture to the treated food. The texture of some vegan or vegetarian products can hereby assume a texture similar to meat products.

In an embodiment, the decreasing volume is provided by the inner tube having a diameter which increases in a direction from the inlet end of the chamber towards the outlet end of the chamber.

In an embodiment, the decreasing volume is provided by the outer tube having a diameter which decreases in a direction from the inlet end of the chamber towards the outlet end of the chamber.

In an embodiment, the decreasing volume is provided by a pressurizer bar, which is tapered on its width, reducing the volume between the tubes, when going from inlet to outlet.

Hereby pressure buildup is made by inserting a conical shaped bar (a pressurizer in a clearance between the inner and outer tube. In an embodiment, the pressurizer bar is placed at the bottom of this clearance. The pressure bar follows the contours of the inner and outer tubes, filling out a part of the elongate chamber, leaving a path for treated produce to be transported through the apparatus from the inlet to the outlet.

In an embodiment, the pressurizer bar is provided with sharp edges along at least one of its longitudinal edges forming a scraping tool to scrape off treated product, sticking to the surface of the heated tube or tubes.

In an alternative embodiment the the pressurizer bar is formed having a waved surface pointing against a waved outer surface of the inner tube, the waved surfaces corresponding to each other, leaving a minimum gap between the two surfaces.

When the pressurizer bar is in close contact between inner and outer tube, the mass of semi liquid or pasty food is prevented from sticking to the surface if burned. Avoid sticking of the food during the treatment in the apparatus leads to a more homogeneous product. Having sharp edges and having the pressurizer bar in close contact between the inner and outer tube, the pressurizer bar, besides reducing the volume between the inner and outer tube, also serves as a scraper.

The reduced volume and thereby increased pressure (pressure buildup) is hereby provided by a waved profile at the inlet. The waves will create pressure peaks and valleys compacting the mass while it is still elastic and formable. The waved profile is provided in the inlet end of the chamber and can be formed by a waved outer surface of the inner tube.

Having the pressurizer bar serving as a scraper allows that the apparatus does not need to be stopped down as frequently for cleaning compared to known equipment as the pressurizer bar keeps the process parts clean.

The pressurizer bar can be used for adjusting the capacity of the heat treatment apparatus. The more of the volume of the heat treatment apparatus is blocked by the pressurizer bar, the less capacity of the apparatus for example measured in kg/hour.

Hereby it is possible to adjust the capacity of the apparatus in relation to the kind of food to be treated and a desired rate of heat treatment.

The faster the food should pass through the treatment apparatus, the less volume should be available in the treatment chamber. In other words, if a certain kind of texture of the treated product needs a certain flow through the apparatus, it is possible to adjust the flow by exchanging the pressurizer bar with a pressurizer bar having a tapering adapted for obtaining this flow.

In an embodiment, the heating means is steam applied through apertures or tubes into a steam chamber formed between the outer tube and an enclosing cylinder sleeve covering at least a part of the length of the outer tube or through an inner side of the inner tube.

Hereby a heat chamber is formed. If steam is used as heating media, the chamber is called a steam chamber. Steam will find the direct way between injection point and extraction point but as the tube is rotating the tube will be heated more evenly than the outer part in a traditional cooker.

In an alternative embodiment, heat is provided by electric heating elements placed on the outer side of the outer tube. The electric heating elements can also be placed in the space formed between the outer tube and an outer sheath encasing the outer tube, replacing steam or another fluid hot media as heat source.

In an alternative embodiment, heat is provided by electric heating elements placed on the inner side of the inner tube.

In yet an alternative embodiment heat is provided by electrical heating elements distributed along an outer side of the outer tube and an inner side of the inner tube.

Using electrical heating elements provides a flexible solution of providing heat.

In an embodiment cutting means is provided at the outlet.

In an embodiment the cutting means extends from a fastening element fastened in its ends to beams extending in a direction parallel to an axis in a lengthwise direction of the inner and outer tubes, said cutting means extending in a direction towards and perpendicular to the axis in a lengthwise direction of the inner and outer tubes.

In an alternative embodiment the cutting means is supported by a ring shaped element fastened to the outlet end of the outer tube.

In an alternative embodiment a support ring supporting the outlet end of the inner tube is fixed to an inner side of a tube shaped or conical shaped element forming an outlet of the apparatus by a connecting member, said connecting member on its side or end facing the outlet of the elongate chamber formed between the inner and outer tubes is provided with a sharp edge forming a cutting means.

Hereby is achieved that the product leaving the outlet can be cut in such a way that the product is transformed from a tubular product into a slab formed product or into one or more longitudinal and flat pieces.

This makes it possible to stamp out smaller pieces from the coherent product. The smaller pieces can have an artificial shape, shapes of silhouettes of animals etc.

The invention is also directed to a method of treatment or preparing of semi liquid or pasty food products. The method comprises: transporting through the treatment apparatus (10) with pressure from a pump capable of transporting semi liquid or pasty vegetable or vegan food as well as meat into an elongate chamber formed between an inner tube (2) and an outer tube (3) placed concentrically in the treatment apparatus (10) where the inner (2) - and outer concentric tubes (3) are rotated in opposite directions.

In an embodiment of the method, a pressure is build up in the elongate chamber by decreasing a volume of the elongate chamber by inserting a conical inner tube in the treatment apparatus.

In an embodiment of the method, a pressure is build up in the elongate chamber by decreasing a volume of the elongate chamber by inserting a tapered pressurizer bar in the chamber between the concentrical tubes in the treatment apparatus.

Hereby is achieved a simple and relatively cheap solution compared to known solutions. The solution can also be used to modify existing apparatuses to be more efficient.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the disclosure.

Hence, it is to be understood that the herein disclosed disclosure is not limited to the particular component parts of the device described or steps of the methods described since such device and method may vary. It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

The above and other features and advantages of the present disclosure, will be more fully appreciated by reference to the following illustrative and nonlimiting detailed description of example embodiments of the present disclosure, when taken in conjunction with the accompanying drawings, in which:

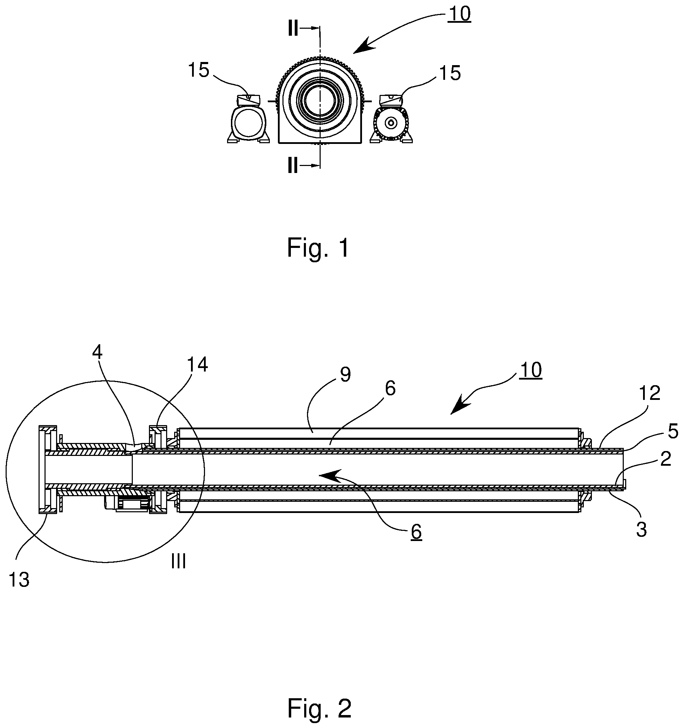

Figure 1 shows an end view of an apparatus for treatment or preparing of semi liquid or pasty food products;
Figure 2 shows a cross section of the apparatus shown in figure 1;

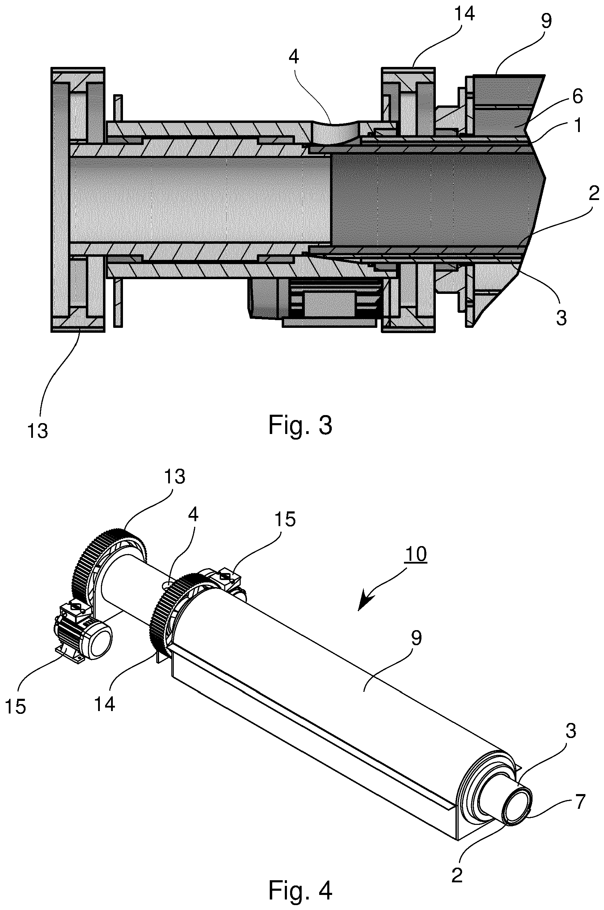

Figure 3 shows an enlarged section, marked with a circle in figure 2;
Figure 4 shows a perspective view of the apparatus;
Figure 5 shows a cross section of the apparatus in perspective view;
Figure 6 shows a combined pressurizer bar and scraper;
Figure 7 shows an embodiment of a combined pressurizer bar and scraper;
Figure 8 shows schematically two concentric tubes of the apparatus;
Figure 9 shows a cross section of the tubes shown in figure 8;
Figure 10 shows an enlarged section, marked with a circle in figure 9;

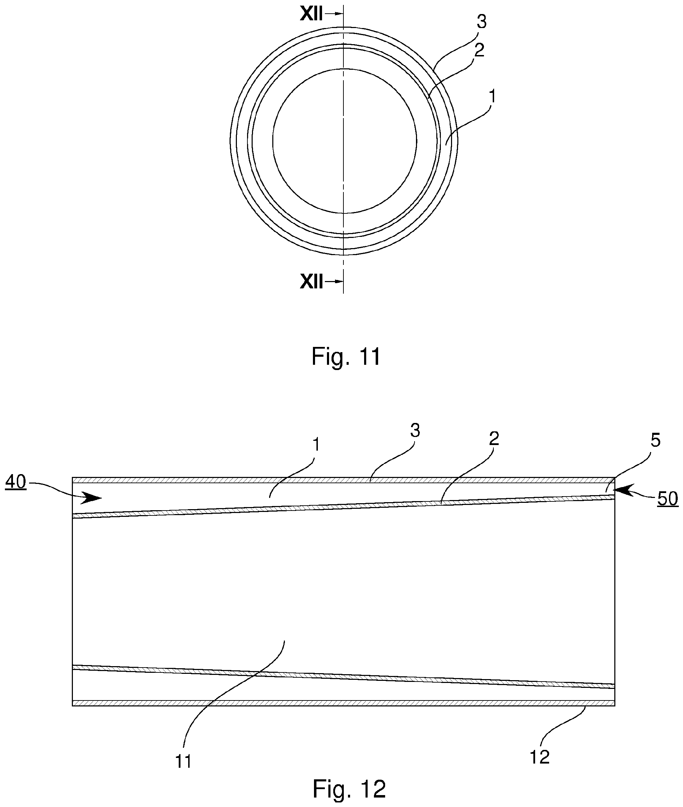

Figure 11 shows an end view of an embodiment of the apparatus having a conical inner tube, seen from the outlet end;
Figure 12 shows a cross section of the tubes shown in figure 11;

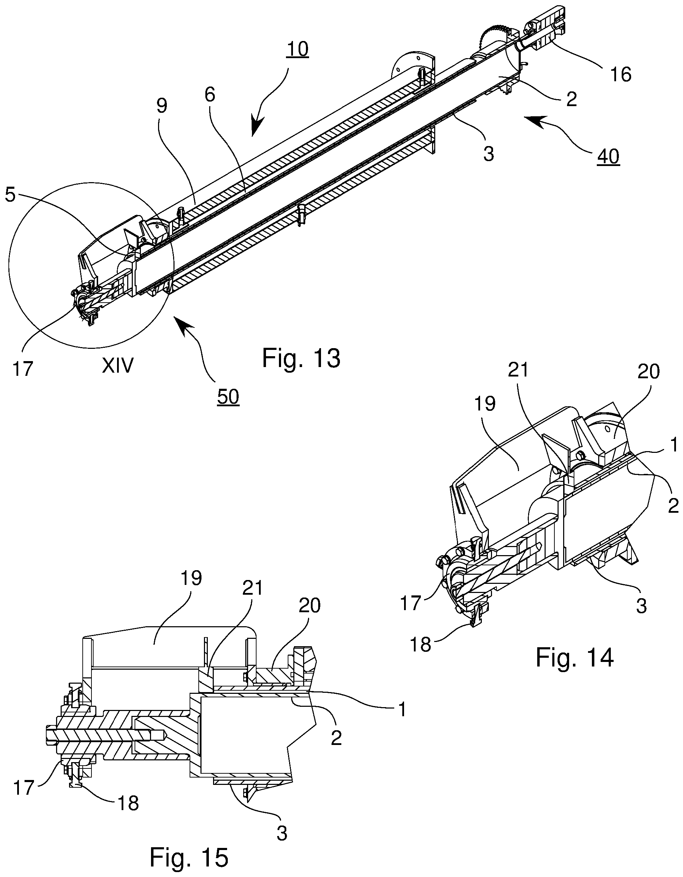

Figure 13 shows a cross section of the apparatus in perspective view with a stabilizing bearing at the end of the inner tube;
Figure 14 shows an enlarged section, marked with a circle in figure 13;
Figure 15 shows a view from the side of figure 14;
Figure 16 shows a cross section of the apparatus in perspective view with a stabilizing bearing at the end of the inner tube;
Figure 17 shows an enlarged section, marked with a circle in figure 16;
Figure 18 shows a view from the side of figure 17;
Figure 19 shows a cross section of the apparatus in perspective view with a stabilizing bearing at the end of the inner tube;
Figure 20 shows an enlarged section, marked with a circle in figure 19;
Figure 21 shows a view from the side of figure 20;

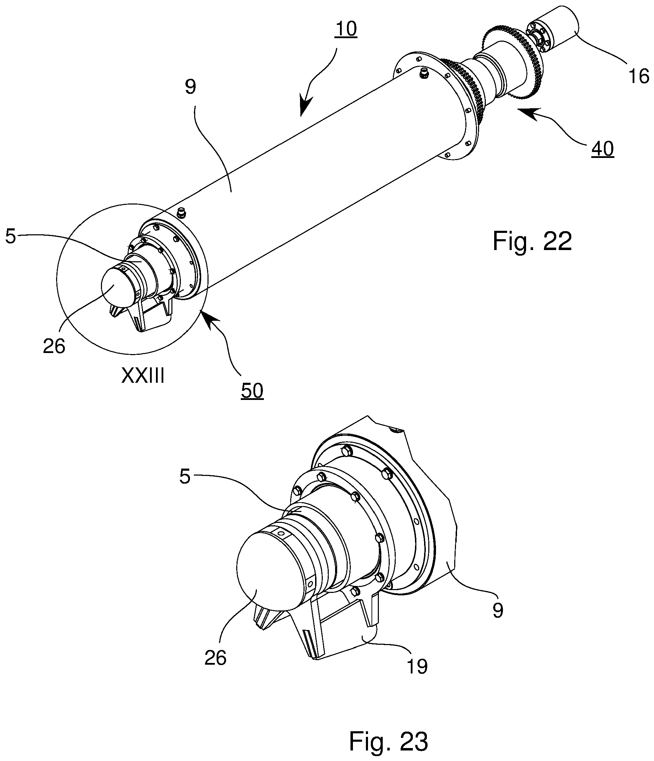

Figure 22 shows the apparatus with a rounded cap covering the bearing at the outlet end;
Figure 23 shows an enlarged view of the outlet, marked with a circle in figure 22.

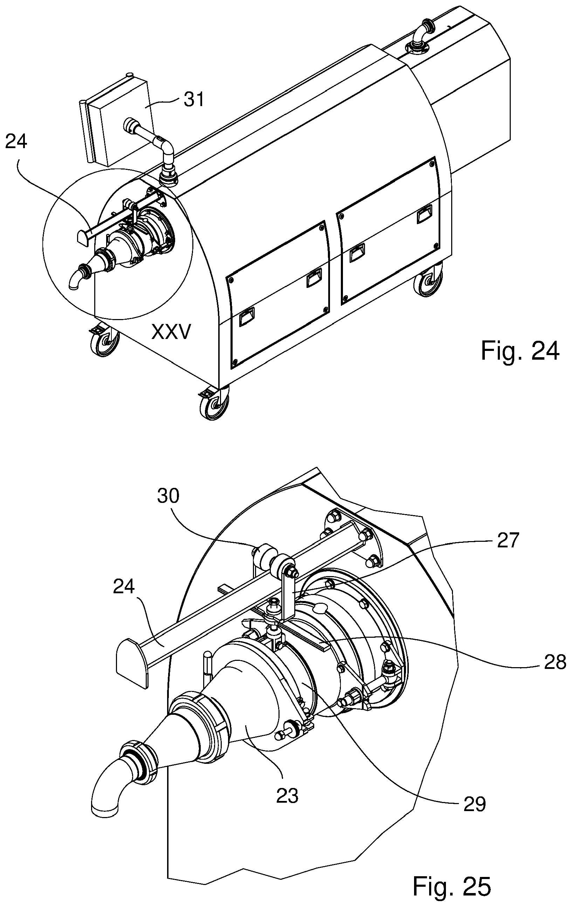

Figure 24 shows the apparatus in a production configuration and with a helping tool for use when changing equipment, and
Figure 25 shows an enlarged view of the outlet marked with a circle in figure 24.

Various embodiments are described hereinafter with reference to the figures. Like reference numerals refer to like elements throughout. Like elements will, thus, not be described in detail with respect to the description of each figure.

It should also be noted that the figures are only intended to facilitate the description of the embodiments.

They are not intended as an exhaustive description of the claimed invention or as a limitation on the scope of the claimed invention. In addition, an illustrated embodiment needs not have all the aspects or advantages shown.

An aspect or an advantage described in conjunction with a particular embodiment is not necessarily limited to that embodiment and can be practiced in any other embodiments even if not so illustrated, or if not so explicitly described.

Throughout, the same reference numerals are used for identical or corresponding parts.

The first aspect of this disclosure shows an apparatus (10) for treatment or preparing of semi liquid or pasty food products supplied to the apparatus by a pump, which apparatus (10) comprises an elongate chamber (1) formed between two concentric tube- formed bodies (2, 3), an inner tube (2) and an outer tube (3), which elongate chamber (1) having an inlet (4) for the product to be treated in one end (40) and an outlet (5) for treated product in an opposite end (50) where at least one of the bodies (2, 3) is provided with heating means, characterized in that said tubes (2, 3) are rotated by driving means (13, 14), such as toothed wheels, belts or other known driving means, where one or more motors (15) drives the inner and outer tubes (2, 3) respectively by engagement with the driving means (13, 14), where the inner tube (2) and the outer tube (3) are rotatable in opposite directions, and that the semi liquid or pasty food products is transported through the apparatus by pressure from the pump.

The tubes are rotated by driving means 13, 14, where one or more motors 15 drives the inner and outer tubes 2, 3 respectively by engagement with driving means 13, 14. The driving means can be toothed wheels, belts or other known driving means.

The tubes 2, 3 can be supported in both ends by bearings or bushings or the tubes can be supported by the driving means in one end only, being the inlet end 40.

To be able to provide a simple and stable equipment for heat treatment 10 of a mass of a semi liquid or pasty food, which food can be human food or animal- or pet food a starting point is taken in a treatment apparatus 10 generally build from two concentric tubes 2, 3, an inner tube 2 and an outer tube 3 forming an elongate chamber 1 situated between the two tubes 2, 3, more precise between an outer surface of the inner tube 2 and an inner surface of the outer tube 3.

According to an embodiment, two main process parts are constituted by a small tube (the inner part) 2 and a larger tube (the outer part) 3. A food mass can be transported through the heat treatment apparatus 10 by pressure from a pump, for example a meat slurry pump or a pump (not shown) capable of transporting semi liquid or pasty vegetable or vegan food as well as meat into the heat treatment apparatus 10.

Hereby no complex and expensive geometry is needed, which reduces fabrication costs substantially.

In an embodiment of the heat treatment apparatus 10, the elongate chamber 1 is provided with a decreasing volume, at least partly over a distance from the inlet end 40 to the outlet end 50 of the chamber 1.

Hereby a pressure is build up in the chamber 1 providing texture to the treated food. The texture of some vegan or vegetarian products can hereby assume a texture similar to meat products.

In an embodiment, the decreasing volume is provided by the inner tube 2 having a diameter which increases in a direction from the inlet end 40 of the chamber 1 towards the outlet end 50 of the chamber 1.

In an embodiment, the decreasing volume is provided by the outer tube 3 having a diameter which decreases in a direction from the inlet end 40 of the chamber 1 towards the outlet end 50 of the chamber 1.

In an embodiment, the decreasing volume is provided by a pressurizer bar 7, which is tapered on its width, reducing the volume between the tubes, when going from inlet to outlet. In the inlet end 40, the pressurizer bar 7 is more narrow than in the outlet end 50. Pressure buildup is made by inserting the pressurizer bar 7, which can be a conical shaped bar following contours of the concentric tubes 2, 3 and placed in the elongate chamber 1 between the inner and outer tube 2, 3. In an embodiment, the pressurizer bar is placed at the bottom of this elongate chamber 1 or clearance. The pressurizer bar 7 thereby fills out a part of the elongate chamber 1, leaving a path for treated produce to be transported through the apparatus 10 from the inlet 4 to the outlet 5.

In an embodiment, the pressurizer bar 7 is provided with sharp edges 8 along at least one of its longitudinal edges 8 forming a scraping tool to scrape off treated product, sticking to the surface of the heated tube or tubes 2, 3.

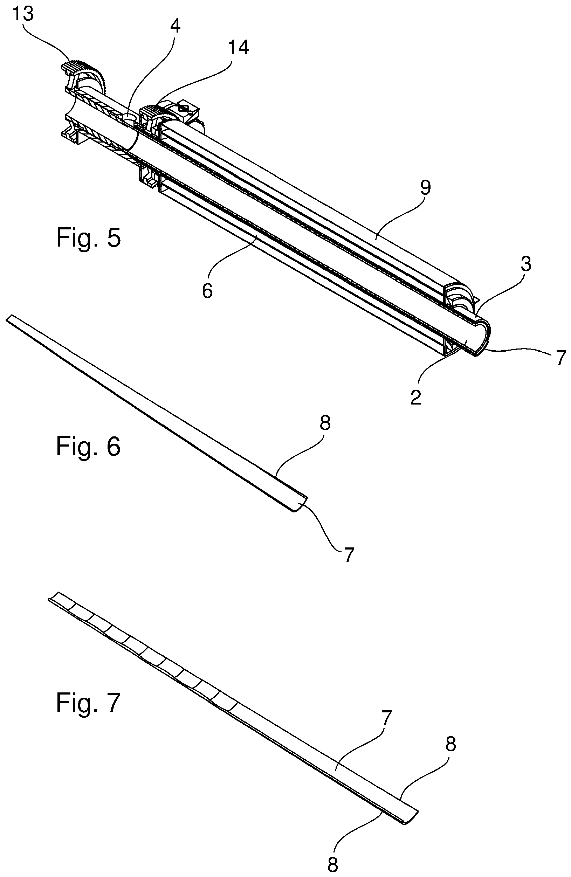

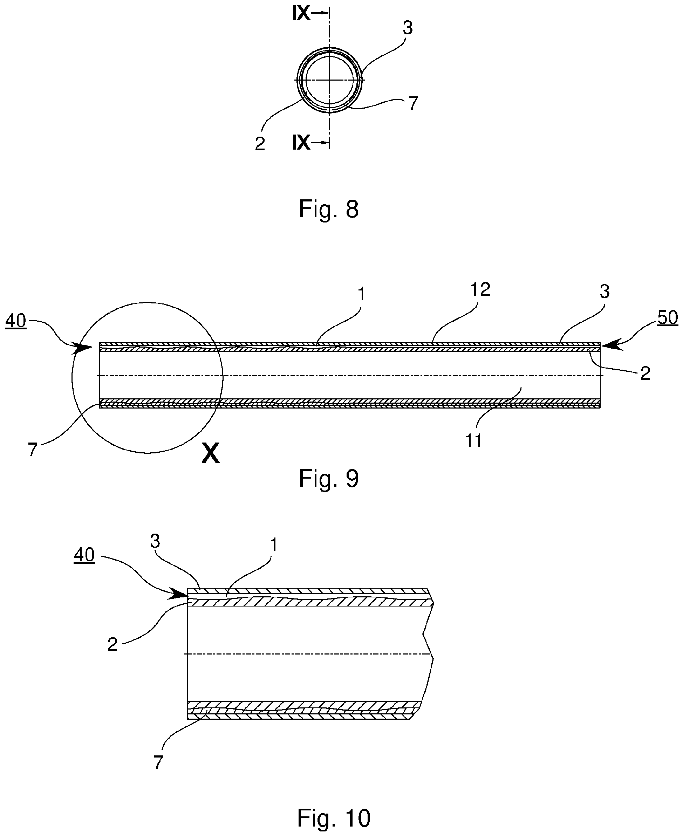

In an alternative embodiment as shown in figures 7, 9 and 10 the pressurizer bar 7 is formed having a waved surface pointing against a waved outer surface of the inner tube 2, the waved surfaces corresponding to each other, leaving a minimum gap between the two surfaces. The pressurizer bar 7 only covers a part of the outer perimeter of the inner tube 2 and the inner perimeter of the outer tube 3, leaving a gap for food to pass through the elongate chamber 1 from inlet 4 to outlet 5 during heat treatment of the food.

The pressurizer bar 7 being in close contact between inner and outer tube 2, 3, lead to the mass of semi liquid or pasty food being prevented from sticking to the surface of the tubes 2, 3 if burned. The ability to avoid sticking of the food during the treatment in the apparatus 10 leads to a more homogeneous product. Having sharp edges 8 and having the pressurizer bar 7 in close contact between the inner and outer tube 2, 3, the pressurizer bar 7, besides reducing the volume between the inner and outer tube 2, 3, also serves as a scraper.

When the reduced volume and thereby increased pressure (pressure buildup) is provided by a waved profile at the inlet end 40 of the elongate chamber 1, the waves will create pressure peaks and valleys compacting the mass while it is still elastic and formable. The waved profile in the inlet end 40 of the chamber 1 can be formed by a waved outer surface of the inner tube 2.

Having the pressurizer bar 7 serving as a scraper allows that the apparatus 10 does not need to be stopped down as frequently for cleaning compared to known equipment as the pressurizer bar 7 keeps the process parts 2, 3 clean.

The pressurizer bar 7 can be used for adjusting the capacity of the heat treatment apparatus 10. The more of the volume of the heat treatment apparatus 10 is blocked by the pressurizer bar 7, the less capacity of the apparatus, for example measured in kg/hour.

Hereby it is possible to adjust the capacity of the apparatus 10 in relation to the kind of food to be treated and a desired rate of heat treatment.

The faster the food should pass through the treatment apparatus 10, the less free volume should be available in the treatment chamber 1. In other words, if a certain kind of texture of the treated product needs a certain flow through the apparatus 10, it is possible to adjust the flow by exchanging the pressurizer bar 7 with a pressurizer bar having a tapering adapted for obtaining this flow.

The heating means can be steam applied through apertures or tubes (not shown) into a steam chamber 6 formed between the outer tube 3 and an enclosing cylinder sleeve 9 covering at least a part of the length of the outer tube 3 or steam can be applied through an inner side 11 of the inner tube 2.

Hereby a heat chamber 6 is formed. If steam is used as heating media, the chamber is called a steam chamber. Steam will find the direct way between injection point and extraction point of the heat chamber 6 but as the tube 2, 3 is rotating, the tube 2, 3 will be heated more evenly than compared to the outer part in a traditional cooker.

In an alternative embodiment, heat is provided by electric heating elements (not shown) placed on the outer side 12 of the outer tube 3. The electric heating elements can also be placed in the space 6 formed between the outer tube 3 and the outer sheath 9 encasing the outer tube 3, replacing steam or another fluid hot media as heat source.

In an alternative embodiment, the electric heating elements can be placed on the inner side 11 of the inner tube 2.

In yet an alternative embodiment the electrical heating elements can be distributed along the outer side 12 of the outer tube 3 and the inner side 11 of the inner tube 2.

Using electrical heating elements provides a flexible solution of providing heat.

The tubes 2, 3 are supported at their ends by a first end support bearing 16 positioned in the inlet end 40 and a second end support bearing 17 positioned at the outlet end 50. The second support bearing 17 is adjustable in a direction perpendicular to an axis in a lengthwise direction of the concentric tubes 2, 3.

The second support bearing 17 is positioned at the end of the tubes 2, 3 at the outlet end 50 and supported by a kind of bridge, formed by two elongate beams 19 extending in a direction parallel to an axis in a lengthwise direction of the inner and outer tubes 2,3, which beams 19 can be a pair of flat irons placed with an angle between them. One end of the beams 19 is mounted to the outlet end 50 of the apparatus 10 or to a spacer or mounting bracket 20, mounted to the apparatus 10. The other end of the beams 19 carries the second support bearing 17. The second support bearing 17 is provided with adjusting means, for example adjusting screws 18.

By adjusting the screws 18, it is possible to adjust a circular gap of the elongate chamber between the inner and outer tube 2, 3. Hereby it is possible to start the process and when product is beginning to come out of the outlet 5, the gap is adjusted by adjusting the adjustment screws 18 in such a way that the product leaves the outlet evenly distributed along the outlet circle.

If an uneven distribution along the outlet circle is desired, it is possible to adjust the outlet 5 accordingly.

Between the beams 19 of the bridge and at a position just outside the end of the elongate chamber 1, one or more cutting means 21 can be positioned to cut or divide the product from a tube shape to a flat shape or to a kind of continuous slab. Continuous should be understand as to be as long as product is leaving the apparatus through the outlet 5. The cutting means here extends from a fastening element fastened in its ends to the beams 19 of the bridge and extending in a direction towards and perpendicular to an axis in a lengthwise direction of the concentric tubes 2, 3.

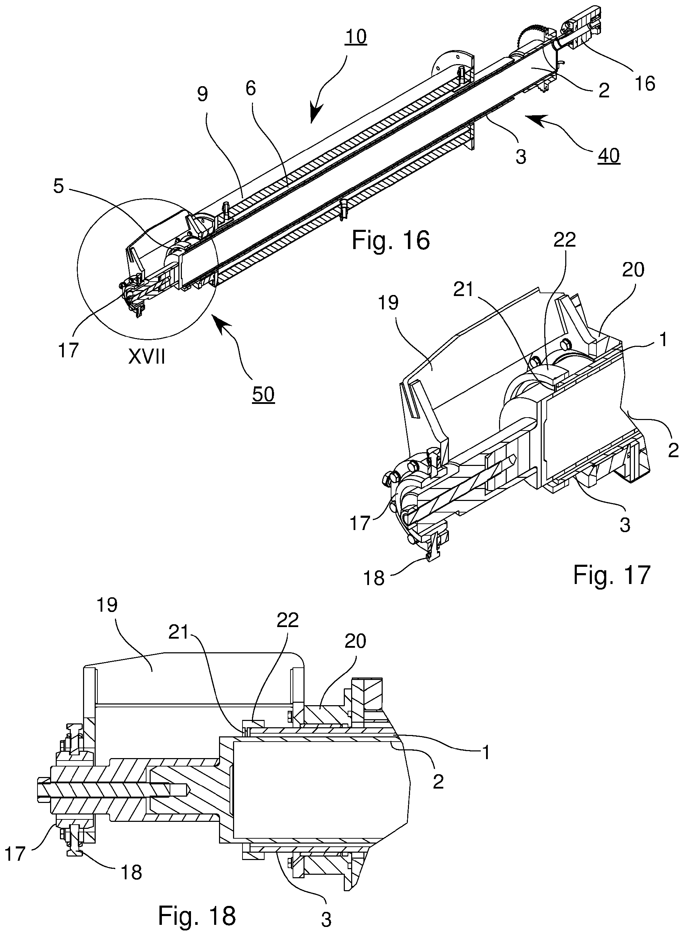

In an embodiment, the cutting means 21 (as illustrated in figures 16 - 18) is supported by a ring shaped element 22 fastened to the outlet end 50 of the outer tube 3.

The cutting means 21, can be a flat and thin sharp element forming a knife 21.

The ring shaped element can be fastened to the outer tube 3 in such a way that the ring shaped element and thereby the knife 21 can be placed at any position along the outlet opening 5 of the elongate chamber 1.

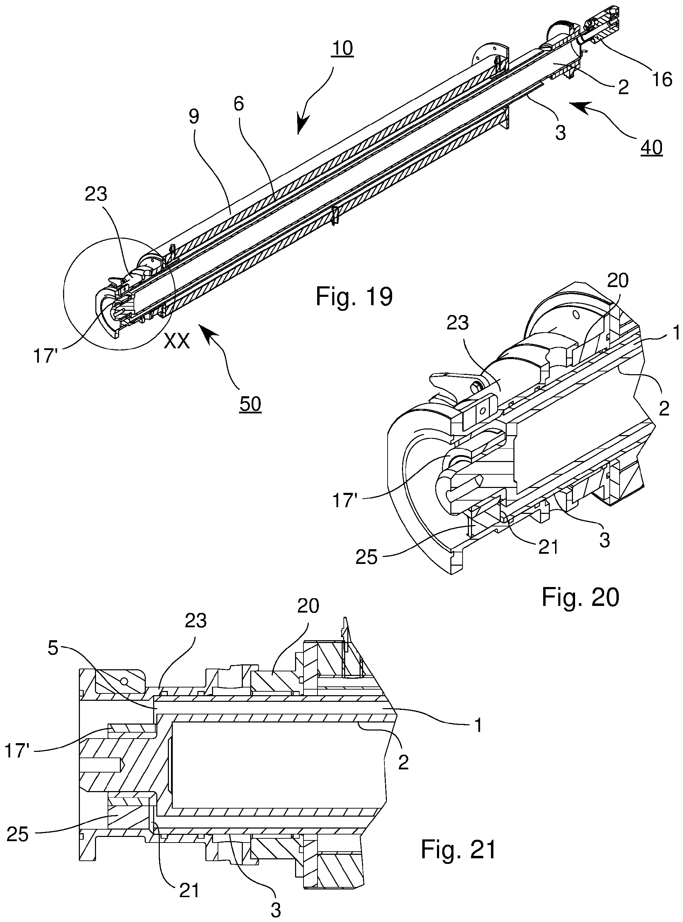

In an embodiment shown in figures 19 to 21 a support ring 17' supports the outlet end 50 of the inner tube 2. The support ring 17' is fixed to an inner side of a tube shaped or conical shaped element 23 forming the outlet of an assembled apparatus, by a connecting member 25, which connecting member on its side or end facing the outlet 5 of the elongate chamber 1 formed between the inner and outer tubes 2, 3 is provided with a sharp edge 21 forming a cutting means for cutting the prepared product leaving the elongate chamber 1 being the cooking chamber.

In an embodiment, the bridge formed by two elongate beams 19 can be placed below the outlet 5 and the second support bearing 17 is provided with a cap 26 covering the adjusting screws 18. Hereby it is possible to let the prepared product pass over the bearing 17 in a smooth movement without getting into contact interference with the bearing 17 and the adjustment screws 18. The cap 26 can be of hemispherical shape.

In an embodiment a cutting means can be placed at the outlet 5 fixed to the inner tube 2 in an angle in relation to the output direction which is parallel to the axis in the longitudinal direction of the apparatus 10 in such a way that when the inner tube 2 rotates, the cutting means in shape of a little knife element (not shown) cuts a slice of the product. Hereby a continuous slice can be made cutting the product in a kind of spiral or coil as long as the prepared product flows through the apparatus.

In an embodiment (not shown) a cutting means comprising at least two pairs of parallel knives in a crossing configuration (like a tic-tac-toe board or pattern) and placed within a circular frame is placed at the outlet end 50 of the apparatus 10. By placing an identical set of knives fixed to a tubular part placed at the end of the outlet 5, which tubular part is rotatable in relation to an axis in a longitudinal direction of the apparatus and the tubular part is provided with an external handle extending in a radial direction of said axis, the two groups of knives can be rotated relative to each other whereby the product processed in the apparatus can be cut into regular or irregular pieces and size of the pieces can be varied or adjusted.

To be able to change output tools on the apparatus 10, a protruding arm 24 can be attached to a shroud or mantle or to a frame supporting the apparatus. The protruding arm 24 is placed above the outlet end 50 of the apparatus and extends in a direction parallel to the longitudinal axis through the inner and outer tubes 2, 3.

A lifting tool 27 provided with a winch or lever 28 for raising or lowering a bracket 29 in relation to the protruding arm 24. The lifting tool is provided with a number of wheels 30 configured for displacing the lifting tool along the length of the protruding arm 24. Hereby it is possible to mount the protruding arm 24 with the tool 27 to the apparatus when any heavy components should be changed or if any adjustment of the equipment should take place and it is convenient to let the tool bear the load.

The apparatus can be provided with a control or operating panel 31 for controlling the process.

In different embodiments of the apparatus 10, the outlet end 50 can be provided with different conical outlets 23. The conical outlet 23 can be one or more conical outlets put together in a tapering way giving a kind of counter pressure, slowing down product output and thereby breaking the product into irregular pieces.

The invention is also directed to a method of treatment or preparing of semi liquid or pasty food products. The method comprises: transporting through the treatment apparatus 10 with pressure from a pump (not shown) capable of transporting semi liquid or pasty vegetable or vegan food as well as meat into an elongate chamber 1 formed between an inner tube 2 and an outer tube 3 placed concentrically in the treatment apparatus 10 where the inner and outer concentric tubes 2, 3 are rotated in opposite directions.

In an embodiment of the method, a pressure is build up in the elongate chamber 1 by decreasing a volume of the elongate chamber 1 by inserting a conical inner tube 2 in the treatment apparatus 10.

In an embodiment of the method, a pressure is build up in the elongate chamber 1 by decreasing a volume of the elongate chamber 1 by inserting a tapered pressurizer bar 7 in the chamber 1 between the concentrical tubes 2, 3 in the treatment apparatus 10.

Hereby is achieved a simple and relatively cheap solution compared to known solutions. The solution can also be used to modify existing apparatuses to be more efficient.

The person skilled in the art realizes that the present disclosure is not limited to the preferred embodiments described above. The person skilled in the art further realizes that modifications and variations are possible within the scope of the appended claims. Additionally, variations to the disclosed embodiments can be understood and effected by the skilled person in practicing the claimed disclosure, from a study of the drawings, the disclosure, and the appended claims.

## Claims

1. Apparatus (10) for treatment or preparing of semi liquid or pasty food products supplied to the apparatus by a pump, which apparatus (10) comprises an elongate chamber (1) formed between two concentric tube-formed bodies (2, 3), an inner tube (2) and an outer tube (3), which elongate chamber (1) having an inlet (4) for the product to be treated in one end (40) and an outlet (5) for treated product in an opposite end (50) where at least one of the bodies (2, 3) is provided with heating means, **characterized in that** said tubes (2, 3) are rotated by driving means (13, 14), such as toothed wheels, belts or other known driving means, where one or more motors (15) drives the inner and outer tubes (2, 3) respectively by engagement with the driving means (13, 14), where the inner tube (2) and the outer tube (3) are rotatable in opposite directions, and that the semi liquid or pasty food products is transported through the apparatus by pressure from the pump.

2. The apparatus (10) according to claim 1, **characterized in that** the elongate chamber (1) is an annular or ring shaped chamber (1).

3. The apparatus (10) according to any one of the claims 1 or 2, **characterized in that** the elongate chamber (1) is provided with a decreasing volume at least partly over a distance from the inlet end (40) to the outlet end (50) of the chamber (1).

4. The apparatus (10) according to claim 3, **characterized in that** the decreasing volume is provided by the inner tube (2) having a diameter which increases in a direction from the inlet end (40) of the chamber (1) towards the outlet end (50) of the chamber (1).

5. The apparatus (10) according to claim 3, **characterized in that** the decreasing volume is provided by the outer tube (3) having a diameter which decreases in a direction from the inlet end (40) of the chamber (1) towards the outlet end (50) of the chamber (1).

6. The apparatus (10) according to claim 3, **characterized in that** the decreasing volume is provided by a pressurizer bar (7) which is tapered on its width reducing the volume between the tubes (2, 3) when going from inlet (4) to outlet (5).

7. The apparatus (10) according to claim 6, **characterized in that** the pressurizer bar (7) is provided with sharp edges along at least one of its longitudinal edges (8) forming a scraping tool to scrape off treated product, sticking to the surface of the heated tube or tubes (2, 3).

8. The apparatus (10) according to any one of the claims 6 or 7, **characterized in that** the pressurizer (7) bar is formed having a waved surface pointing against a waved outer surface of the inner tube (2), the waved surfaces corresponding to each other, leaving a minimum gap between the two surfaces.

9. The apparatus (10) according to any one or more of the claims 1 - 8, **characterized in that** the heating means is steam applied through apertures or tubes into a steam chamber (6) formed between the outer tube (3) and an enclosing cylinder sleeve (9) covering at least a part of the length of the outer tube (3) or through an inner side (11) of the inner tube (2).

10. The apparatus (10) according to any one or more of the claims 1 - 8, **characterized in that** the heating means is electrical heating elements distributed along an outer side (12) of the outer tube (3).

11. The apparatus (10) according to any one or more of the claims 1 - 8, **characterized in that** heating means is electrical heating elements distributed along an inner side (11) of the inner tube (2).

12. The apparatus (10) according to any one or more of the claims 1 - 8, **characterized in that** heating means is electrical heating elements distributed along an outer side (12) of the outer tube (3) and an inner side (11) of the inner tube (2).

13. The apparatus (10) according to any one or more of the claims 1-12, **characterized in that** cutting means (21) is provided at the outlet (5).

14. The apparatus according to claim 13, **characterized in that** the cutting means (21) extends from a fastening element fastened in its ends to beams (19) extending in a direction parallel to an axis in a lengthwise direction of the inner and outer tubes (2,3), said cutting means extends in a direction towards and perpendicular to the axis in a lengthwise direction of the inner and outer tubes (2,3).

15. The apparatus according to claim 13, **characterized in that** the cutting means (21) is supported by a ring shaped element (22) fastened to the outlet end (50) of the outer tube (3).

16. The apparatus according to claim 13, **characterized in that** a support ring (17') supporting the outlet end (50) of the inner tube (2) is fixed to an inner side of a tube shaped or conical shaped element (23) forming an outlet of the apparatus (10) by a connecting member (25), said connecting member on its side or end facing the outlet (5) of the elongate chamber (1) formed between the inner and outer tubes (2, 3) is provided with a sharp edge (21) forming a cutting means.

17. Method of treatment or preparing of semi liquid or pasty food products, which method comprises: transporting through the treatment apparatus (10) with pressure from a pump capable of transporting semi liquid or pasty vegetable or vegan food as well as meat into an elongate chamber (1) formed between an inner tube (2) and an outer tube (3) placed concentrically in the treatment apparatus (10) where the inner (2) and outer (3) concentric tubes are rotated in opposite directions.

18. The method of claim 17, wherein a pressure is build up in the elongate chamber (1) by decreasing a volume of the elongate chamber (1) by inserting a conical inner tube (2) in the treatment apparatus (10).

19. The method of claim 17, wherein a pressure is build up in the elongate chamber (1) by decreasing a volume of the elongate chamber (1) by inserting a tapered pressurizer bar (7) in the chamber (1) between the concentrical tubes (2, 3) in the treatment apparatus (10).

## Patentansprüche

1. Vorrichtung (10) zur Behandlung oder Zubereitung von halbflüssigen oder pastösen Nahrungsmittelprodukten, die der Vorrichtung durch eine Pumpe zugeführt werden, wobei die Vorrichtung (10) eine längliche Kammer (1) umfasst, die zwischen zwei konzentrischen rohrförmigen Körpern (2, 3), einem inneren Rohr (2) und einem äußeren Rohr (3) gebildet ist, wobei die längliche Kammer (1) an einem Ende (40) einen Einlass (4) für das zu behandelnde Produkt und an einem gegenüberliegenden Ende (50) einen Auslass (5) für das behandelte Produkt aufweist, wobei mindestens einer der Körper (2, 3) mit einem Heizmittel bereitgestellt ist, **dadurch gekennzeichnet, dass** die Rohre (2, 3) durch Antriebsmittel (13, 14), wie etwa Zahnräder, Riemen oder andere bekannte Antriebsmittel, gedreht werden, wobei ein oder mehrere Motoren (15) das innere und das äußere Rohr (2, 3) jeweils durch Eingriff mit den Antriebsmitteln (13, 14) antreiben, wobei das innere Rohr (2) und das äußere Rohr (3) in entgegengesetzte Richtungen drehbar sind, und dass die halbflüssigen oder pastösen Nahrungsmittelprodukte durch Druck von der Pumpe durch die Vorrichtung transportiert werden.

2. Vorrichtung (10) nach Anspruch 1, **dadurch gekennzeichnet, dass** die längliche Kammer (1) eine kreisförmige oder ringförmige Kammer (1) ist.

3. Vorrichtung (10) nach einem der Ansprüche 1 oder 2, **dadurch gekennzeichnet, dass** die längliche Kammer (1) mindestens teilweise über eine Strecke von dem Einlassende (40) zu dem Auslassende (50) der Kammer (1) mit einem abnehmenden Volumen bereitgestellt wird.

4. Vorrichtung (10) nach Anspruch 3, **dadurch gekennzeichnet, dass** das abnehmende Volumen dadurch bereitgestellt wird, dass das innere Rohr (2) einen Durchmesser aufweist, der in einer Richtung von dem Einlassende (40) der Kammer (1) zu dem Auslassende (50) der Kammer (1) hin zunimmt.

5. Vorrichtung (10) nach Anspruch 3, **dadurch gekennzeichnet, dass** das abnehmende Volumen dadurch bereitgestellt wird, dass das äußere Rohr (3) einen Durchmesser aufweist, der in einer Richtung von dem Einlassende (40) der Kammer (1) zu dem Auslassende (50) der Kammer (1) hin abnimmt.

6. Vorrichtung (10) nach Anspruch 3, **dadurch gekennzeichnet, dass** das abnehmende Volumen durch eine Druckhaltestange (7) bereitgestellt wird, die sich auf ihrer Breite verjüngt und das Volumen zwischen den Rohren (2, 3) beim Übergang vom Einlass (4) zum Auslass (5) verringert.

7. Vorrichtung (10) nach Anspruch 6, **dadurch gekennzeichnet, dass** die Druckhaltestange (7) entlang mindestens einer ihrer Längskanten (8) mit scharfen Kanten bereitgestellt ist, die ein Abstreifwerkzeug bilden, um das behandelte Produkt, das an der Oberfläche des beheizten Rohrs oder der beheizten Rohre (2, 3) anhaftet, abzustreifen.

8. Vorrichtung (10) nach einem der Ansprüche 6 oder 7, **dadurch gekennzeichnet, dass** die Druckhaltestange (7) mit einer gewellten Oberfläche ausgebildet ist, die gegen eine gewellte Außenfläche des inneren Rohrs (2) gerichtet ist, wobei die gewellten Oberflächen einander entsprechen und einen minimalen Spalt zwischen den beiden Oberflächen lassen.

9. Vorrichtung (10) nach einem oder mehreren der Ansprüche 1-8, **dadurch gekennzeichnet, dass** das Heizmittel Dampf ist, der durch Öffnungen oder Rohre in eine Dampfkammer (6) eingebracht wird, die zwischen dem äußeren Rohr (3) und einer umschließenden Zylinderhülse (9), die mindestens einen Teil der Länge des äußeren Rohrs (3) abdeckt, oder durch eine Innenseite (11) des inneren Rohrs (2) gebildet ist.

10. Vorrichtung (10) nach einem oder mehreren der Ansprüche 1-8, **dadurch gekennzeichnet, dass** das Heizmittel elektrische Heizelemente sind, die entlang einer Außenseite (12) des äußeren Rohrs (3) verteilt sind.

11. Vorrichtung (10) nach einem oder mehreren der Ansprüche 1-8, **dadurch gekennzeichnet, dass** das Heizmittel elektrische Heizelemente sind, die entlang einer Innenseite (11) des inneren Rohrs (2) verteilt sind.

12. Vorrichtung (10) nach einem oder mehreren der Ansprüche 1-8, **dadurch gekennzeichnet, dass** das Heizmittel elektrische Heizelemente sind, die entlang einer Außenseite (12) des äußeren Rohrs (3) und einer Innenseite (11) des inneren Rohrs (2) verteilt sind.

13. Vorrichtung (10) nach einem oder mehreren der Ansprüche 1-12, **dadurch gekennzeichnet, dass** an dem Auslass (5) ist ein Schneidmittel (21) bereitgestellt ist.

14. Vorrichtung nach Anspruch 13, **dadurch gekennzeichnet, dass** sich das Schneidmittel (21) von einem Befestigungselement aus erstreckt, das an seinen Enden an Trägern (19) befestigt ist, die sich in einer Richtung parallel zu einer Achse in Längsrichtung des inneren und des äußeren Rohrs (2, 3) erstrecken, wobei sich das Schneidmittel in Richtung und senkrecht zu der Achse in Längsrichtung des inneren und des äußeren Rohrs (2, 3) erstreckt.

15. Vorrichtung nach Anspruch 13, **dadurch gekennzeichnet, dass** das Schneidmittel (21) durch ein ringförmiges Element (22) gestützt wird, das an dem Auslassende (50) des äußeren Rohrs (3) befestigt ist.

16. Vorrichtung nach Anspruch 13, **dadurch gekennzeichnet, dass** ein Stützring (17'), der das Auslassende (50) des inneren Rohrs (2) stützt, durch ein Verbindungselement (25) an einer Innenseite eines rohrförmigen oder kegelförmigen Elements (23), das einen Auslass der Vorrichtung (10) bildet, fixiert ist, wobei das Verbindungselement an seiner Seite oder seinem Ende, die/das dem Auslass (5) der zwischen dem inneren und äußeren Rohr (2, 3) gebildeten länglichen Kammer (1) zugewandt ist, mit einer scharfen Kante (21) bereitgestellt ist, die ein Schneidmittel bildet.

17. Verfahren zur Behandlung oder Zubereitung von halbflüssigen oder pastösen Nahrungsmittelprodukten, wobei das Verfahren Folgendes umfasst: Transportieren, mit Druck von einer Pumpe, die geeignet ist, halbflüssige oder pastöse vegetarische oder vegane Lebensmittel sowie Fleisch zu transportieren, durch die Behandlungsvorrichtung (10) in eine längliche Kammer (1), die zwischen einem inneren Rohr (2) und einem äußeren Rohr (3) gebildet wird, die konzentrisch in der Behandlungsvorrichtung (10) angeordnet sind, wobei das innere (2) und das äußere (3) konzentrische Rohr in entgegengesetzte Richtungen gedreht werden.

18. Verfahren nach Anspruch 17, wobei ein Druck in der länglichen Kammer (1) aufgebaut wird, indem ein Volumen der länglichen Kammer (1) durch Einführen eines konischen inneren Rohrs (2) in die Behandlungsvorrichtung (10) verringert wird.

19. Verfahren nach Anspruch 17, wobei ein Druck in der länglichen Kammer (1) aufgebaut wird, indem ein Volumen der länglichen Kammer (1) verringert wird, indem eine sich verjüngende Druckhaltestange (7) in die Kammer (1) zwischen die konzentrischen Rohre (2, 3) in der Behandlungsvorrichtung (10) eingeführt wird.

## Revendications

1. Appareil (10) de traitement ou de préparation de produits alimentaires semi-liquides ou pâteux fournis à l'appareil par une pompe, lequel appareil (10) comprend une chambre allongée (1) formée entre deux corps tubulaires concentriques (2, 3), un tube interne (2) et un tube externe (3) ladite chambre allongée (1) ayant une entrée (4) pour le produit à traiter à une extrémité (40) et une sortie (5) pour le produit traité à une extrémité opposée (50), où au moins l'un des corps (2, 3) est pourvu d'un moyen de chauffage, **caractérisé en ce que** lesdits tubes (2, 3) sont entraînés en rotation par des moyens d'entraînement (13, 14), tels que des roues dentées, des courroies ou autres moyens d'entraînement connus, où un ou plusieurs moteurs (15) entraînent respectivement les tubes intérieurs et extérieurs (2, 3) par prise avec les moyens d'entraînement (13, 14), où le tube intérieur (2) et le tube extérieur (3) peuvent tourner dans des directions opposées, et **en ce que** les produits alimentaires semi-liquides ou pâteux sont transportés à travers l'appareil par de la pression de la pompe.

2. Appareil (10) selon la revendication 1, **caractérisé en ce que** la chambre allongée (1) est une chambre annulaire ou en forme d'anneau (1).

3. Appareil (10) selon l'une quelconque des revendications 1 ou 2, **caractérisé en ce que** la chambre allongée (1) est pourvue d'un volume décroissant au moins en partie sur une distance allant de l'extrémité d'entrée (40) à l'extrémité de sortie (50) de la chambre (1).

4. Appareil (10) selon la revendication 3, **caractérisé en ce que** le volume décroissant est fourni par un tube intérieur (2) ayant un diamètre qui augmente dans une direction allant de l'extrémité d'entrée (40) de la chambre (1) vers l'extrémité de sortie (50) de la chambre (1).

5. Appareil (10) selon la revendication 3, **caractérisé en ce que** le volume décroissant est fourni par un tube extérieur (3) ayant un diamètre qui diminue dans une direction allant de l'extrémité d'entrée (40) de la chambre (1) vers l'extrémité de sortie (50) de la chambre (1).

6. Appareil (10) selon la revendication 3, **caractérisé en ce que** le volume décroissant est fourni par une barre de pressurisation (7) qui est effilée sur sa largeur réduisant le volume entre les tubes (2, 3) dans le sens de l'entrée (4) vers la sortie (5).

7. Appareil (10) selon la revendication 6, **caractérisé en ce que** la barre de pressurisation (7) est pourvue d'arêtes vives le long d'au moins un de ses bords longitudinaux (8) formant un outil de raclage pour racler le produit traité, collant à la surface du ou des tubes chauffés (2, 3).

8. Appareil (10) selon l'une quelconque des revendications 6 ou 7, **caractérisé en ce que** la barre de pressurisation (7) est formée en ayant une surface ondulée pointant contre une surface externe ondulée du tube interne (2), les surfaces ondulées correspondant l'une à l'autre, laissant un écart minimum entre les deux surfaces.

9. Appareil (10) selon une ou plusieurs des revendications 1 à 8, **caractérisé en ce que** le moyen de chauffage est constitué de vapeur appliquée à travers des ouvertures ou des tubes dans une chambre à vapeur (6) formée entre le tube extérieur (3) et un manchon de cylindre enveloppant (9) couvrant au moins une partie de la longueur du tube externe (3) ou à travers un côté interne (11) du tube interne (2).

10. Appareil (10) selon une ou plusieurs des revendications 1 à 8, **caractérisé en ce que** le moyen de chauffage est constitué d'éléments chauffants électriques répartis le long d'un côté externe (12) du tube externe (3).

11. Appareil (10) selon une ou plusieurs des revendications 1 à 8, **caractérisé en ce que** le moyen de chauffage est constitué d'éléments chauffants électriques répartis le long d'un côté interne (11) du tube interne (2).

12. Appareil (10) selon une ou plusieurs des revendications 1 à 8, **caractérisé en ce qu'**un moyens de chauffage est constitué d'éléments chauffants électriques répartis le long d'un côté externe (12) du tube externe (3) et d'un côté interne (11) du tube interne (2).

13. Appareil (10) selon une ou plusieurs des revendications 1 à 12, **caractérisé en ce qu'**un moyen de coupe (21) est prévu au niveau de la sortie (5).

14. Appareil selon la revendication 13, **caractérisé en ce que** le moyen de coupe (21) s'étend depuis un élément de fixation fixé dans ses extrémités à des poutres (19) s'étendant dans une direction parallèle à un axe dans un sens de la longueur des tubes intérieur et extérieur (2,3), ledit moyen de coupe s'étend dans une direction perpendiculaire à l'axe et vers celui-ci dans une direction longitudinale des tubes intérieurs et extérieurs (2, 3).

15. Appareil selon la revendication 13, **caractérisé en ce que** le moyens de coupe (21) est soutenu par un élément en forme d'anneau (22) fixé à l'extrémité de sortie (50) du tube extérieur (3) .

16. Appareil selon la revendication 13, **caractérisé en ce qu'**un anneau de support (17') soutenant l'extrémité de sortie (50) du tube interne (2) est fixé sur un côté interne d'un élément en forme de tube ou de forme conique (23) formant une sortie de l'appareil (10) par un élément de connexion (25), ledit élément de connexion sur son côté ou son extrémité faisant face à la sortie (5) de la chambre allongée (1) formée entre les tubes internes et externes (2, 3) est pourvu d'arêtes vives (21) formant un moyen de coupe.

17. Procédé de traitement ou de préparation de produits alimentaires semi-liquides ou pâteux, lequel procédé comprend : le transport à travers l'appareil de traitement (10) au moyen de pression d'une pompe capable de transporter des aliments végétaux ou végétaliens semi-liquides ou pâteux ainsi que de la viande dans une chambre allongée (1) formée entre un tube interne (2) et un tube externe (3) placés de manière concentrique dans l'appareil de traitement (10) où les tubes concentriques internes (2) et externes (3) tournent dans des directions opposées.

18. Procédé selon la revendication 17, dans lequel une pression est accumulée dans la chambre allongée (1) en diminuant un volume de la chambre allongée (1) en insérant un tube interne conique (2) dans l'appareil de traitement (10).

19. Procédé selon la revendication 17, dans lequel une pression est accumulée dans la chambre allongée (1) en diminuant un volume de la chambre allongée (1) en insérant une barre de pressurisation effilée (7) dans la chambre (1) entre les tubes concentriques (2, 3) dans l'appareil de traitement (10).
